# EUROPEAN PATENT APPLICATION

(11) **EP 2 860 555 A1**
(43) Date of publication of application: **15.04.2015**
(21) Application number: 13187801.9
(22) Date of filing: 08.10.2013
(51) Int. Cl.: G02B 3/14, G02B 26/00, G02B 3/12

(54) **Tunable lens**

(71) Applicant: Optotune AG, 8953 Dietikon (CH)
(72) Inventor: Aschwanden, Manuel, 6319 Allenwinden (CH); Borer, Daniel, 8952 Schlieren (CH); Niederer, David, 5024 Küttingen (CH); Waibel, Philipp, 8048 Zürich (CH); Laning, Christopher, 8057 Zürich (CH)
(74) Representative: Schulz, Ben Jesko

(57) **Abstract**

The present invention relates to a tunable lens, comprising: a transparent and elastically expandable first membrane (10), a first optical element (20) opposing the first membrane (10), a first wall (30) connecting the first optical element (20) to the first membrane (10), wherein the first membrane (10), the first optical element (20), and said first wall (30) delimit a first volume (V), and a first fluid (F) residing in said first volume (V). According to the invention, the first wall (30) is designed to be adjustable in height (H) with respect to said first optical element (20), so as to adjust the pressure of the first fluid (F) residing inside the first volume (V) and therewith a curvature of said first membrane (10), and/or so as to adjust a spatial position of the first membrane (10).

## Description

The invention relates to a tunable lens, particularly for the use in optical devices, according to the preamble of claim 1 as well as to a method for tuning a lens according to claim 15.

Such a tunable lens comprises a transparent and elastically expandable first membrane, a first optical element opposing the first membrane, a first wall connecting the first optical element to the first membrane, wherein the first membrane, the first optical element, and said first wall delimit a first volume of the lens, and a first fluid residing in said first volume.

Such lenses are described for instance in US2010202054 which relates to a liquid lens system comprising an actuator being connected to a membrane so as to change the optical behavior of the membrane, wherein said actuator presses e.g. a holding ring against the membrane so as to deform an optically active part of the membrane, wherein said holding ring divides the membrane into said optically active part and an outer circumferential region of the membrane.

Further, WO2010104904 describes a lens assembly in which a force is directly exerted on the membrane e.g. by means of a coil.

Furthermore, US2011267703 discloses a fluidic lens with manually-adjustable focus, wherein a ring-shaped piston directly indents the membrane in order to deform it.

Thus, due to the membrane deforming techniques of the above-stated prior art, the use of the membrane for optical purposes is in principle limited to an optically active region of the membrane which is separated from an outer circumferential region of the membrane by means for deforming the membrane itself so as to achieve a tunable curvature of said optically active region of the membrane. Particularly, this leads to restrictions concerning the ratio between the clear aperture of the lens being defined by the diameter of said optically active region of the lens and the outer lens diameter which is considerably larger than the clear aperture due to the afore-described principles of deforming the membrane in the state of the art.

Based on the above, the problem underlying the present invention is to provide for an improved tunable lens of the afore-mentioned kind and a corresponding method which particularly allow for increasing said ratio between the clear aperture of the lens and the outer lens diameter.

This problem is solved by a lens having the features of claim 1. Preferred embodiments of the present invention are stated in the sub claims and are described below.

According to the characterizing portion of claim 1, the first wall is designed to be adjustable in height with respect to said first optical element, so as to adjust the pressure of the first fluid residing inside the first volume and therewith a curvature of said first membrane, and/or so as to adjust a spatial position of the first membrane with respect to the first optical element.

Particularly, the first fluid couples a height adjusting movement of the first wall to the first membrane for adjusting said curvature and/or spatial position. Therefore, preferably, said first fluid fills the first volume completely, wherein it contacts said first membrane as well as the first wall and the first optical element.

The first membrane (as well as any other membrane described in here) can be made of at least one of the following materials: a glass, a polymer, an elastomer, a plastic or any other transparent and stretchable or flexible material. For example, the first membrane (and also the second membrane, see below) may be made of a silicone-based polymer such as poly(dimethylsiloxane) also known as PDMS or a polyester material such as PET or a biaxially-oriented polyethylene terephtalate (e.g. "Mylar").

Further, said first fluid (as well as any other fluid described in here) preferably is or comprises a liquid metal, a gel, a liquid, a gas, or any transparent, absorbing or reflecting material which can be deformed. For example, the first fluid (and also the second fluid, see below) may be a silicone oil (e.g. Bis-Phenylpropyl Dimethicone). Additionally the fluids may include fluorinated polymers such as perfluorinated polyether (PFPE) inert fluid.

Furthermore, the first optical element is preferably rigid compared to the first membrane. Preferably, the stiffness of the first optical element is at least 10 times higher than that of the first membrane.

Preferably, the first optical element is formed out of or comprises: a glass, a plastic, a polymer, or a metal. It can comprise or can be formed as an (e.g. glass) window, a lens, a micro structured element with refractive, diffractive and/or reflective structures. Further, the first optical element may comprise an antireflection coating. Furthermore, the first optical element may also be formed as transparent and elastically expandable membrane like the first membrane or may comprise such a membrane (see also below).

Preferably, according to an embodiment of the present invention, said first wall particularly protrudes along a first direction (which may extend perpendicular to the first optical element) from said first optical element towards said first membrane or towards a first holding member for the first membrane (see also below).

According to a preferred embodiment of the present invention, said first wall is designed to be adjustable in height with respect to said first optical element, such that when said height is decreased (e.g. along the first direction), the pressure of the first fluid increases due to the essentially constant volume of the first fluid causing the first membrane to expand and said curvature of the first membrane to increase, and such that when said height is increased, the pressure of the first fluid decreases causing the first membrane to contract and said curvature of the first membrane to decrease. Increasing curvature thereby means that the first membrane may develop a more pronounced convex bulge, or that the membrane changes from a concave or a flat state to a convex one. Likewise, a decreasing curvature means that the membrane changes from a pronounced convex state to a less pronounced convex state or even to a flat or concave state, or changes from a flat or concave state to an even more pronounced concave state. The curvature may be expressed by means of its radius (also termed ROC for radius of curvature). A smaller ROC means a stronger lens effect or shorter focal length. A negative ROC stands for a concave lens.

According to a preferred embodiment, the first wall is designed to be deformed along a first direction in order to be adjusted in height along said first direction, wherein particularly said first wall protrudes along said first direction from the first optical element or wherein particularly said first direction runs parallel to the optical axis of the lens or perpendicular to the first optical element.

In a preferred embodiment, the first wall is designed such that it deforms easier along said first direction along which the first wall comprises said adjustable height and along which the first wall particularly protrudes from the first optical element than in a second direction running perpendicular to said first direction (e.g. parallel to the first optical element).

Therefore, according to yet another embodiment of the present invention, the first wall preferably comprises a bellows or is formed as a bellows. Preferably, said bellows comprises a plurality of e.g. elongated regions, wherein particularly each two adjacent regions are connected to each other via a crease (e.g. integrally or via an additional connection means), particularly such that when said height of the first wall is decreased said neighboring regions are folded/pivoted towards each other and when said height of the first wall is increased said neighboring regions are folded/pivoted away from each other. The creases may be structurally reinforced by rigid elongated members.

In a preferred embodiment of the present invention, the bellows comprises two circumferential regions connected via a single circumferential crease of the bellows.

According to an embodiment of the present invention, the first membrane may be fastened via an outermost (e.g. circumferential) edge region to an (e.g. circumferential) first (e.g. upper) edge region of the first wall, preferably such that the first membrane is in a pretensioned state.

According to an embodiment of the present invention, the lens comprises a first holding member for holding the first membrane. Preferably, the first membrane is fastened to said first holding member via an outermost (e.g. circumferential) edge region of the first membrane.

Further, preferably, the first holding member delimits an optically active and elastically expandable (e.g. circular) region of the first membrane which region extends up to an (e.g. circumferential) inner edge of the first holding member, and wherein particularly said region comprises said curvature of the first membrane that is to be adjusted.

Here, optically active region means that light can pass via this optically active region through the lens and is thereby influenced by the optical properties of the lens.

Further, said first holding member is preferably connected to the first wall, preferably to an (e.g. circumferential) first (e.g. upper) edge region of the first wall. However, the first wall may also be integrally connected to the first holding member (e.g. the first holding member may form an integral part of the first wall). Preferably, the first membrane is fastened to the holding member such that the first membrane is in a pretensioned state.

In a further embodiment of the present invention, the first wall may be integrally formed with the first membrane meaning that the first upper edge region of the first wall is integrally connected to said outermost edge region of the first membrane, i.e. the first wall and the first membrane are formed in one piece which is connected to the first holding member such that said first wall and said optically active and elastically expandable region protrude from the holding member, respectively.

Preferably, the first wall and the first membrane are connected to a lower side of the first holding member facing towards the first optical element.

Particularly, said first holding member may also be denoted as a (first) lens shaper, since it preferably defines the shape of the lens as described below.

In an embodiment of the present invention, the first holding member may be formed as a circular first holding member to which the membrane is fastened via said outermost edge region of the first membrane, wherein, when said circular first holding member delimits a circular optically active and elastically expandable region of the first membrane, the latter comprises a rotation symmetry with respect to the optical axis of the lens resulting in a rotationally symmetrical lens.

In another preferred embodiment of the present invention said optically active and elastically expandable region of the first membrane may be a rectangle, wherein the first holding member comprises two parallel members attached to the first membrane such that a cylindrical lens results. The other two opposing sides of said expandable region are particularly only connected to the bellows. Any other first holding member (or first lens shaper) shape is possible. The first holding member can be an injection molded part, can be made out of or comprise a metal, a glass, a plastic or a silicon. For instance, the first lens shaper may be formed as lens shaper made of silicon.

Said first wall may be designed to be adjusted in height manually or - according to a preferred embodiment of the present invention - with help of an actuator means which is coupled to the first wall. Particularly, the actuator means is designed to deform the lens by acting (e.g. pushing) on a structure of the lens which results in the deformation of the first wall (e.g. bellow) and due to the constant volume in the lens (due to the first fluid) to a change of the optical property of the lens (e.g. as described above).

Particularly, said actuator means is designed to exert a force on the first wall for adjusting the height of the latter such that the point of application of said force lies outside said optically active and elastically expandable region of the first membrane (i.e. said force lies within the extension plane of the first wall). Preferably, said actuator means is coupled to said first wall via said first holding member, wherein particularly said actuator means is directly coupled to said first holding member. Alternatively, said actuator means may be directly coupled to the first wall, particularly to its first (upper) edge region.

The actuator means can be formed as an electromagnetic actuator such as a voice coil motor, a stepper motor, or as an electrostatic actuator such as a piezo motor, or even an electroactive polymer actuator. The actuator means can consist of one or several individual actuators, and may further be designed to move/deform the first wall, particularly the first holding member and therewith the first wall, in all spatial directions (x, y, z). Additionally, the actuator means may be designed to rotate the holding member or a corresponding part (e.g. the first/upper edge region of the first wall) around all spatial axes.

According to a preferred embodiment of the present invention, the first wall is designed to be adjustable in height such that the respectively adjusted height is constant along the first wall and/or such that the height of at least two different (e.g. opposing) sections of the first wall can be adjusted differently, so that the height of one section differs from the height of the other section. Preferably, the first wall is adjustable in height such that the spatial orientation of the first holding member or a corresponding region of the first wall can be adjusted, particularly so as to allow for an asymmetric deformation of the lens with respect to the optical axis.

Thus, according to an embodiment of the present invention, said actuator means is designed to adjust the height of the first wall such that the respectively adjusted height of the first wall is constant along the first wall and/or such that the height of said one section of the first wall differs from the height of said other section of the first wall. Preferably, the actuator means is designed to adjust the height of the first wall such that the spatial orientation of the first holding member or a corresponding region of the first wall can be adjusted, particularly so as to allow for an asymmetric deformation of the lens with respect to the optical axis.

In a preferred embodiment of the present invention said first wall is a circumferential first wall, i.e., extends along the whole periphery of the first optical element and of the first membrane and/or first holding member. However, it is also conceivable that the first wall does only form a part of such a circumferentially extending wall or that merely a section of the first wall along said periphery is adjustable in height.

In a further embodiment of the present invention, the first wall is designed to be deformed, particularly sheared, such that the first membrane is displaced in a direction extending parallel to said first optical element, which direction may correspond to said second direction running perpendicular to the first direction along which the first wall is adjustable in height. Preferably, said actuator means is designed to deform, particularly shear, said first wall such that the first membrane is displaced in said direction extending parallel to said first optical element. Such a displacement of the membrane can be used for image stabilization in case the lens is used in an optical device for generating images by means of the lens (e.g. a camera).

In a further preferred embodiment, the lens comprises a second optical element, which can be designed as described above with respect to the first optical element, wherein the second optical element preferably faces the first optical element, and wherein the first membrane and particularly the first holding member are arranged between the first and the second optical element.

Further, the lens preferably comprises a circumferential second wall connecting the second optical element to the first membrane, too.

Preferably, the second wall is connected to the first membrane via the first holding member, wherein particularly the second wall is connected to the first holding member on a side of the first holding member facing away from the first wall, thus providing a coupling between the two walls.

Further, preferably, the second optical element, the second wall and the first membrane are connected such that they delimit a second volume of the lens, wherein the lens further comprises a second fluid residing in said second volume.

Further, preferably, said second wall is designed to be adjustable in height, too, namely with respect to said second optical element, wherein the two walls are designed to be adjusted in height together due to said coupling of the first wall to the second wall, so as to adjust the pressure of the first fluid residing inside the first volume and the pressure the second fluid residing inside the second volume and therewith a curvature of said first membrane, and/or so as to adjust a spatial position of the first membrane with respect to the optical elements.

Particularly, when the height of the first wall is decreased, the height of the second wall is increased and vice versa due to said coupling of the first wall to the second wall.

Furthermore, the first wall is preferably tilted towards the first optical element and the second wall is preferably tilted towards the second optical element, particularly so as to increase the field of view of the lens.

Again, in the embodiment described above the second fluid couples a height adjusting movement of the second wall to the second membrane for adjusting said curvature and/or spatial position. Therefore, said second fluid fills the first volume completely, wherein it contacts said first membrane as well as the first wall and the first optical element.

Preferably, in order to suppress deformation of the first membrane due to gravity, the pressures of the first and second fluid are preferably higher than the pressure of the ambient atmosphere so that the first membrane is pinned between the two fluids. The pressures of the fluids may be equal leading to a flat initial state of the first membrane. However, one of the fluids may have pressure that is higher than that of the other fluid leading to an initial bulge of the membrane towards the fluid having the smaller pressure. Further, the first and the second fluid can have the same or a different composition.

According to a further embodiment of the present invention, the first optical element is formed as a transparent and elastically expandable second membrane, so that two opposing membranes are present which are connected by an (e.g. circumferential) first wall. In case the height of the first wall is adjusted also a curvature of the second membrane and/or a spatial position of the second membrane is adjusted. Preferably, the lens comprises a second holding member for holding the second membrane, wherein particularly the second membrane is fastened to said second holding member. Further, said second holding member is preferably connected to the first wall, particularly to a (lower) second edge region of the first wall, which second edge region opposes said first edge region of the first wall. Preferably, the second membrane is fastened to the second holding member via an outermost edge region of the second membrane such that the second membrane is particularly in a pretensioned state. The second holding member can be designed as described above with respect to the first holding member. Again, the second holding member determines the shape of the second membrane and therefore of the lens (see above) and is hence also denoted as second lens shaper. The specific advantage of using two opposing membranes lies within the fact that then each membrane requires less deformation in order to achieve a certain optical characteristic of the lens compared to the situation where only one deformable membrane is present.

In a further embodiment of the present invention, the lens comprises an e.g. circumferential region forming a further lens shaper, which region rests against an outer side of the first membrane facing away from the first fluid, wherein said region separates an inner region of the first membrane comprising said curvature to be adjusted from an outer region of the first membrane. Preferably said inner region forms an optically active and elastically expandable region of the first membrane, which region comprises said curvature to be adjusted.

In case of such an additional e.g. circumferential region forming a lens shaper, the lens may comprise a housing in an embodiment of the present invention, wherein said e.g. circumferential region is a e.g. circumferential edge region of the housing, which edge region preferably delimits an aperture of the housing through which light enters or leaves the lens. Preferably, said housing surrounds the first wall such that the first wall can be adjusted in height inside said housing. Further, said housing preferably comprises an air exchange hole for allowing ambient air to flow into and out of the housing so that the pressure inside the housing and outside said first volume of the lens remains constant and does not affect the first membrane. Further, a support ring arranged in the first volume and extending from the first optical element rests against the inner side of the first membrane so that the first membrane is clamped between said e.g. circumferential region and the support ring, so that the membrane can have convex as well as a concave curvature. Preferably, the support ring comprises apertures so that the fluid can flow through said support ring.

According to a further embodiment of the present invention, said circumferential region is connected to the first wall, particularly to the first holding member, such that said circumferential region can be displaced together with the first wall or first holding member.

Preferably said outer region of the first membrane then defines - together with the first fluid thereunder a further parasitic lens.

Further, preferably, a light source such as a LED or a laser is provided, which light source is particularly arranged on said circumferential region so that light being emitted from said light source impinges on said outer region of the first membrane being part of said parasitic further lens.

Further, the lens preferably comprises a light intensity sensor, particularly a photodiode, wherein the light source is designed to shine light on said further lens, such that said further lens directs at least a portion of said light on the light intensity sensor. Preferably said light intensity sensor is arranged in the first volume, particularly on the first optical element.

Further, the lens preferably comprises a temperature sensor for detecting the temperature of the first fluid, wherein particularly said temperature sensor is arranged in the first volume.

Furthermore, the lens preferably comprises a control unit being designed to control the actuator means depending on a signal of the light intensity sensor and the temperature measured by the temperature sensor such that the first membrane is deformed in a fashion that compensates for temperature-induced drifts of the pressure of the first fluid as well as of the refraction index of the first fluid.

Thus according to a further aspect of the present invention a method for controlling a tunable lens is provided, wherein the respective actual value (e.g. current of the photodiode or intensity of the light on the photodiode) is measured by the photodiode, and the parasitic lens is adjusted by means of the actuator means so that the current of the photodiode (or said intensity) reaches a reference value, which may be pre-determined (e.g. stored in look-up table) for each temperature measured by the temperature sensor.

According to yet another embodiment of the present invention, a rigid layer is fastened to at least a portion of said outer region of the first membrane, which portion connects said inner region of the first membrane to a section of the first wall that is preferably formed as or comprises a bellows as described above, particularly via the first holding member. Here, the circumferential region may be a circumferential region of a part of the lens that is connected to the first optical element and that may surround at least a portion of the first wall. Further, merely said section of the first wall opposing said part needs to be adjustable in height, wherein a height adjusting movement of said section of the first wall can be effectively transmitted to the inner region of the first membrane due to the rigid layer that is designed to prevent a pronounced deformation of said portion of the outer region of the first membrane when the height of said section of the first wall is adjusted. Thus, the notion rigid means that said rigid layer is significantly more rigid than the outer region of the first membrane so as to reduce deformation of the outer region of the first membrane upon adjusting the height of said section of the first wall.

Preferably, said section of the first wall is designed to be adjustable in height such that when the height of said section of the first wall is decreased, said rigid layer together with said portion of the outer region of the first membrane is pivoted towards the first optical element thus increasing the pressure of the first fluid and therewith a curvature of the inner region of the first membrane, and such that when the height of said section of the first wall is increased, said rigid layer together with said portion of the outer region of the first membrane is pivoted away from the first optical element thus decreasing the pressure of the first fluid and therewith a curvature of the inner region of the first membrane.

According to a further aspect of the present invention, an optical device is provided comprising a lens according to the invention. Particularly said optical device is a camera, particularly a mobile phone camera, or a mobile phone having a camera comprising a lens according to the invention.

The use of the lens according to the invention is very versatile and further includes without limitation devices such as: Ophthalmology equipment such as phoropter, refractometer, fundus cameras, ppt. biometrie, perimeter, refractometer, tonometer, anomaloskop, kontrastometer, endothelmicroscope, anomaloscope, binoptometer, OCT, rodatest, ophthalmoscope, RTA; as well as lighting devices, devices for machine vision, laser processing devices, devices for conducting a light show, printers, metrology devices, (e.g. head-worn) glasses, medical devices, robot cams, motion tracking devices, microscopes, telescopes, endoscopes, binoculars, surveillance cameras, automotive devices, projectors, ophthalmic lenses, range finder, bar code readers, and web cams.

Further, the problem underlying the present invention is solved by a method for tuning a lens having the features of claim 15.

According thereto the method for tuning a lens comprising a transparent and elastically expandable first membrane, a transparent first optical element opposing the first membrane, a first wall connecting the first optical element to the first membrane, wherein the first membrane, the first optical element, and said first wall delimit a first volume, and a first fluid residing in said first volume, wherein particularly said first fluid fills the first volume completely and particularly contacts said first membrane, comprises the steps of adjusting the first wall in height with respect to said first optical element, so as to adjust the pressure of the first fluid residing inside the first volume and therewith a curvature of said first membrane, and/or so as to adjust a spatial position of the first membrane.

The method according to the invention preferably uses a lens according to the invention. The sub claims and the above description pertaining to the lens according to the invention may be used to further specify the method according to the invention. Further features and advantages of the present inventions as well as embodiments of the present invention shall be described in the following with reference to the Figures, wherein
- Fig. 1: shows a plan view of a first membrane attached to a first holding member;
- Fig. 2: shows cross sectional views of lens according to the invention having a first wall in the form of a bellows;
- Fig. 3: shows a plan view of a first membrane attached to a further first holding member;
- Fig. 4: shows cross sectional views of a lens according to the invention of the kind, wherein the lens is designed to be deformed asymmetrically;
- Fig. 5: shows cross sectional views of a lens according to the invention, wherein the first membrane is designed to be displaced laterally;
- Fig. 6: shows cross sectional views of a lens according to the invention, wherein the lens comprises a first membrane being arranged between a first and a second fluid so as to minimize gravitational effects on the lens;
- Fig. 7: shows cross sectional views of a lens according to the invention, wherein the lens comprises two opposing membranes;
- Fig. 8: shows cross sectional views of a lens according to the invention, wherein the lens comprises a fixed lens shaper;
- Fig. 9: shows cross sectional views of a lens according to the invention, wherein the lens comprises a lens shaper for generating a parasitic further lens;
- Fig. 10: shows cross sectional views of a lens according to the invention, wherein the lens comprises a first wall having a section being adjustable in height, which section is connected to a rigid layer of the first membrane acting as a lever;
- Fig. 11: shows a perspective and cross sectional view of a further embodiment of the present invention of the kind shown in Fig. 2, wherein the actuator is formed as a coil motor; and
- Fig. 12: shows a perspective and cross sectional view of a further embodiment of the present invention of the kind shown in Fig. 2, wherein the actuator is formed as a piezo motor.

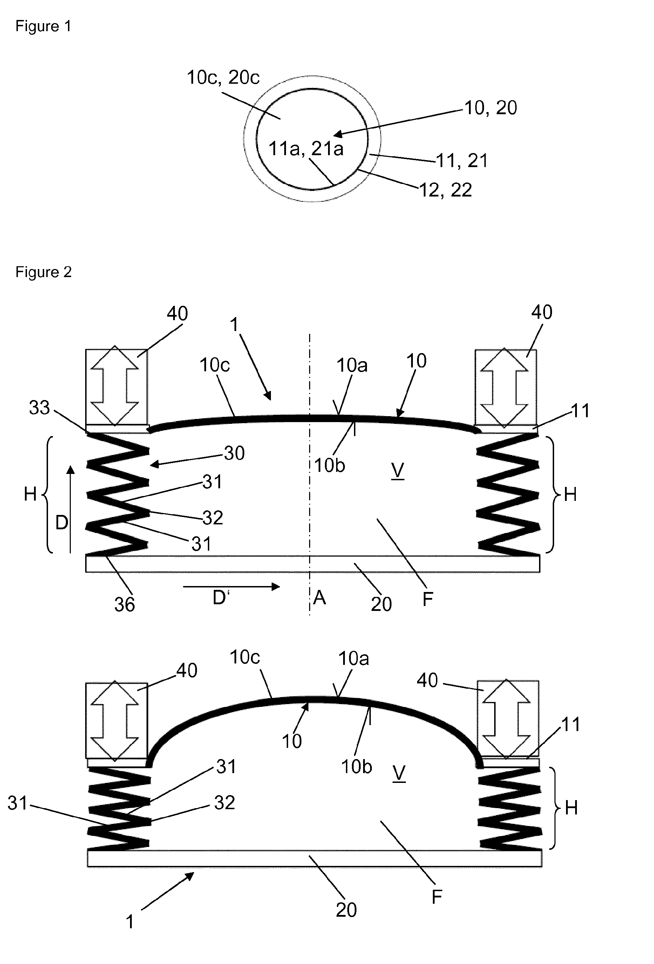

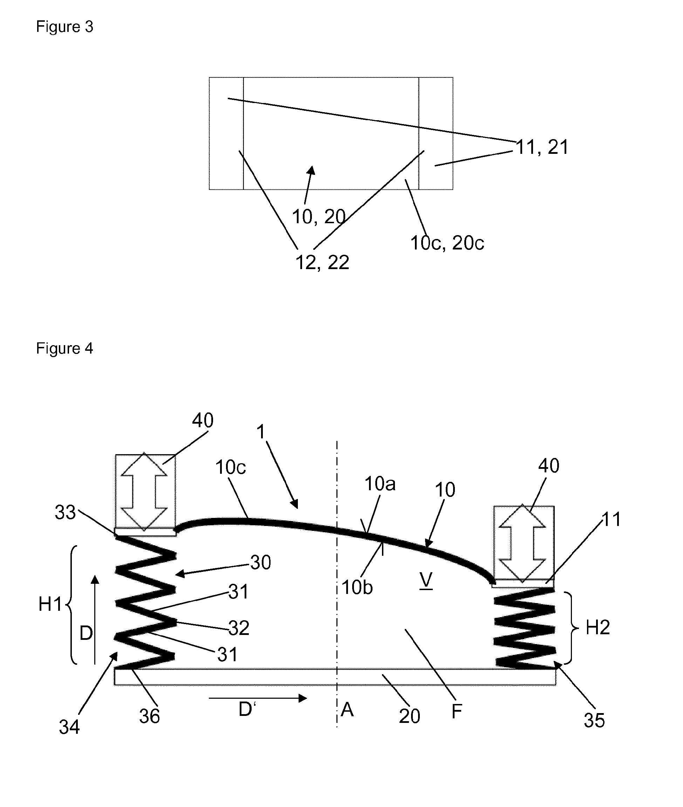

Figure 2 shows in conjunction with Fig. 1 an embodiment of a tunable lens 1 according to the invention. The lens 1 comprises a transparent and elastically expandable first membrane 10 as shown in Fig. 1. The first membrane 10 can be made of a glass, a polymer, an elastomer, a plastic or any other transparent and elastically expandable material. The first membrane 10 is attached via an outermost edge region 12 of the first membrane 10 to a circular first holding member 11 such that the membrane 10 is preferably in a pretensioned state. The circular first holding member 11 actually delimits an optically active and elastically expandable circular region 10c of the first membrane 10 which region 10c extends up to a circumferential inner edge 11 a of the first holding member 11. As an alternative, said region 10c may also have a rectangular shape in case a correspondingly shaped first holding member 11 is used as shown in Fig 3. Such a first holding member 11 may comprise two separate parallel members or may be formed as a rectangular frame having to parallel legs shaping the lens.

This results in a cylindrical lens 1 instead of a spherical lens 1. However, any other shape of said region 10c is also possible by choosing the geometry of the first holding member 11 accordingly.

The lens 1 further comprises a first optical element 20 opposing the first membrane 10, wherein said first optical element 20 is an e.g. plate-like rigid element that extends along an extension plane being oriented perpendicular to an optical axis A of the lens 1. The first optical element 20 can be transparent. Particularly, the first optical element may be formed out of or comprises a glass, and can be formed as an (e.g. glass) window, a lens, a micro structured element with refractive, diffractive or reflective structures. The first optical element 20 can further be made of plastic, a polymer or a metal. It may further comprise a reflection or antireflection coating.

The first membrane 10 and the first optical element 20 face each other along said optical axis A, wherein these two components are connected to each other via a circumferential first wall 30, which is connected to said first holding member 11 via a first upper circumferential edge region 33 of the first wall 30, and which is connected to the first optical element 20 via a circumferential second lower edge region 36 of the first wall 30, which second edge region 36 opposes the first edge region 33. Thus, the first wall 30 protrudes from the first optical element 20 along a first direction D which may run parallel to the optical axis A towards the first holding member 11.

The first membrane 10, the first optical element 20, and said first wall 30 are connected such that they delimit a first volume V of the lens 1 which is filled with a first fluid F such that said first fluid F fills the first volume V completely and particularly presses against an inner side 10b of the first membrane 10 facing the first optical element 20.

Now, in order to adjust a curvature of the membrane 10, e.g. of said region 10c, for adjusting the focal length of the lens 1 and/or so as to adjust the spatial position of the first membrane 10 with respect to the first optical element 20, the first wall 30 is designed to be adjustable in height H along said first direction D with respect to said first optical element 20, so as to adjust the pressure of the first fluid F residing inside the first volume V. Here, the height H of the first wall 30 may be adjusted such that the pressure of the first fluid F changes which leads to a corresponding change of the curvature of the first membrane 10 of the lens 1 due to the constant volume of the fluid F.

Specifically, when said height H of the first wall 30 is decreased overall, which would correspond to a reduction of the volume V of the lens 1, the first fluid F presses due to its incompressibility against the elastically deformable region 10c of the first membrane 10, thus increasing the curvature of this region 10c. At the same time said region 10c of the first membrane 10 expands elastically.

Further, when said height H is increased overall, the pressure of the first fluid F decreases causing said region 10c of the first membrane 10 to contract and said curvature of said region 10c of the first membrane 10 to decrease.

However, as indicated in Figure 4, the height H of the first wall 30 may also be changed asymmetrically with respect to axis A in a way that the pressure of the fluid F remains constant or is the same after adjusting the height H. Then, merely the spatial position of said first membrane 10 or said region 10c of the first membrane 10 is changed. However, an asymmetrical height adjustment may also lead to an altered pressure of the first fluid F and a corresponding change in curvature of said region 10c of the first membrane 10.

Specifically, as shown in Fig. 4, the height H1 of a first section 34 of the first wall 30 may be higher than the height H2 of an opposing section 35 of the first wall 30 leading to a tilted orientation of said region 10c of the first membrane 10 with respect to said optical axis A or the first optical element 20.

Preferably, the first wall 30 as indicated in Figs. 2 and 4, comprises a bellows or is formed as a bellows. Such a bellows 30 comprises a plurality of e.g. circumferential and particularly flexible regions 31, wherein particularly each two adjacent regions 31 are connected to each other via an (e.g. circumferential) crease 32, such that when said height H of the first wall 30 is decreased said adjacent regions 31 are folded towards each other and when said height H of the first wall 30 is increased said adjacent regions 31 are folded away from each other. Thus, concerning its cross section, the first wall or bellows 30 preferably comprises a zig-zag pattern. The creases 32 of the bellows 30 may be reinforced by means of rigid elongated members that may follow the course of an associated crease 32.

Preferably, said creases 32 extend along or parallel to the extension plane of the first optical element 20 (i.e. in a peripheral direction of the first wall/bellows 30) or perpendicular to said first direction D.

Due to the bellows structure, the first wall 30 deforms easier in said first direction D along which the first wall 30 comprises said adjustable height H than in a second direction D' running perpendicular to said first direction D.

In order to adjust the height H of the first wall 30 either locally or in an overall fashion, the lens 1 comprises an actuator means 40 which is coupled to the first wall 30 so as to adjust its height H along said direction D.

Preferably, said actuator means 40 is designed to exert a force on the first wall 30 so as to adjust the height H of the first wall 30, wherein particularly said actuator means 40 is coupled to said first holding member 11, so that the point of application of said force lies outside said region 10c of the first membrane 10. Thus, when the actuator means pushes on the first holding member 11 counter to the first direction D said regions 32 of the bellows 30 approach each other and the height of the first wall 30 decreases. On the other hand, when the actuator means 40 moves the first holding member 11 in the first direction D away from the first optical element 20, the regions 31 of the bellows 30 are folded/pivoted away from their respective adjacent regions 31 and the height H of the first wall 30 increases correspondingly. Particularly, the actuator means 40 may be connected to the first optical element 20 so as to be able to move the first holding member 11 with respect to the first optical element 20.

Particularly, said actuator means 40 does not push a structure against said region 10c of the first membrane 10. Therefore, the whole region 10c of the first membrane 10 can in principle be used for influencing a light path which allows one to increase the ration between the clear aperture and the outer diameter of the lens 1.

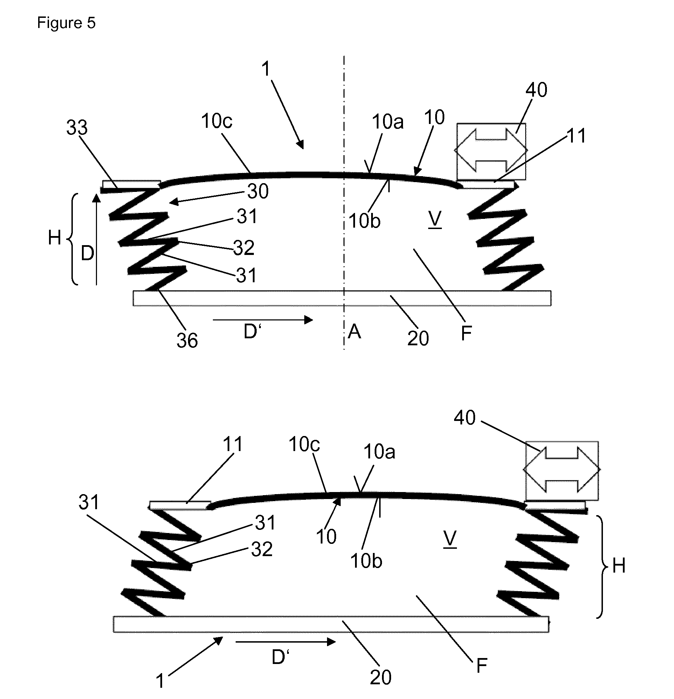

Further, as shown in Fig. 5, the first wall 30, e.g. in the form of a bellows 30, may be also adjustable in a lateral direction (i.e. the second direction D'). Such a shearing movement of the first wall 30 may be used for the purpose of image stabilization, i.e., in order to compensate for a movement of the lens 1 in a plane running perpendicular to the optical axis A. Here, the actuator means 40 is also preferably coupled to the first holding member 11 and designed to displace said first holding member 11 along said second direction D'.

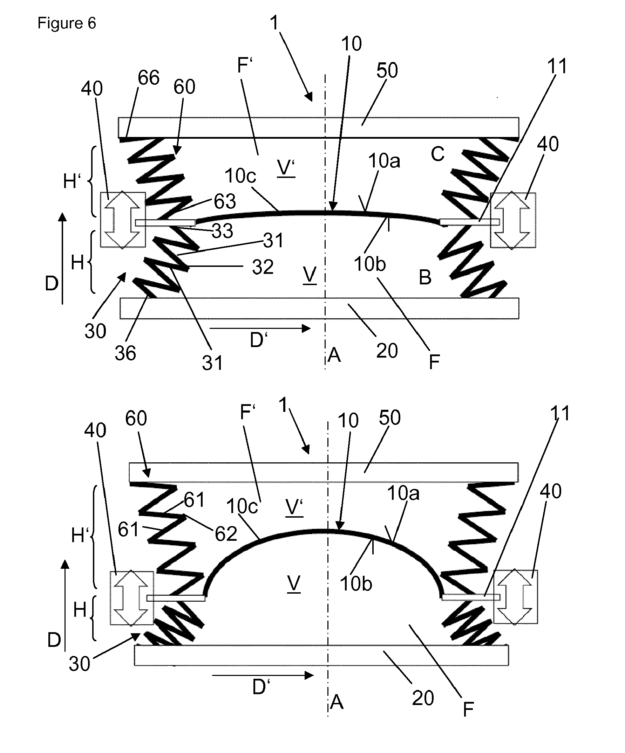

In the embodiment shown in Fig. 6, the lens 1 is designed as described with respect to Fig. 2, but comprises in addition a second optical element 50 opposing the first optical element 20 along the first direction D, wherein the first membrane 10 and its first holding member 11 are now arranged between the first and the second optical element 20, 50. Furthermore, the lens 1 comprises a circumferential second wall 60 which is preferably formed or comprises a bellows as described with respect to Fig. 2, i.e., the second wall 60 comprises elongated regions 61, too, which regions 61 extend in a peripheral direction of the second wall 60 (across the first direction D) and are connected by creases 62 such that adjacent regions 61 of the bellows 60 can be folded towards and away from each other.

The second wall 60 is connected to said first holding member 11 via a first circumferential edge region 63 of the second wall 60, and further connected to the second optical element 50 from which it protrudes counter to said first direction D towards the first holding member 11 via a circumferential second edge region 66 of the second wall 60, which second edge region 66 opposes the first edge region 63.

Thus a coupling between the two walls 30, 60 is provided.

Further, the first membrane 10, the second optical element 50, and said second wall 60 delimit a second volume V' of the lens 1, which second volume V' is filled with a second fluid F'.

Since the second wall 60 is designed to be adjustable in height H' too, namely with respect to said second optical element 50, the first holding member 11 can be either moved towards the first optical element 20 (which means decreasing the height H of the first wall 30 and increasing the height H' of the second wall 60) or towards the second optical element 50 (which means decreasing the height H' of the second wall 60 and increasing the height H of the first wall 30). Thus, the pressure of the first fluid F may be increased and that of the second fluid F' decreased or vice versa leading to a corresponding change in curvature of said region 10c of the first membrane 10. The initial pressures of the fluids F and F' may be chosen such that the first membrane 10 is pinned between the two fluids F, F' so that a deformation of the first membrane 10 due to gravity is suppressed. Of course, the heights H, H' may also be adjusted by moving the first holding member 11 such that the pressure of the fluids F, F' remains the same after the adjustment so that merely the spatial position of the first membrane 10 changes as described with respect to Fig. 4.

In Fig. 6 the two optical elements 20, 50 may be connected to each other so as to keep their distance along the optical axis A constant. Further, the actuator means 40 which acts on the first holding member 11 may be connected to the first and/or second optical element so as to move the first holding member 11 relative to the optical elements 20, 50.

Further, as indicated in Fig. 6, the first wall 30 is preferably tilted towards the first optical element 20 such that it encloses an acute angle B with the first optical element 20. Likewise, the second wall 60 is preferably tilted towards the second optical element 50 such that it encloses an acute angle C with the second optical element 20. This increases the field of view of the lens 1.

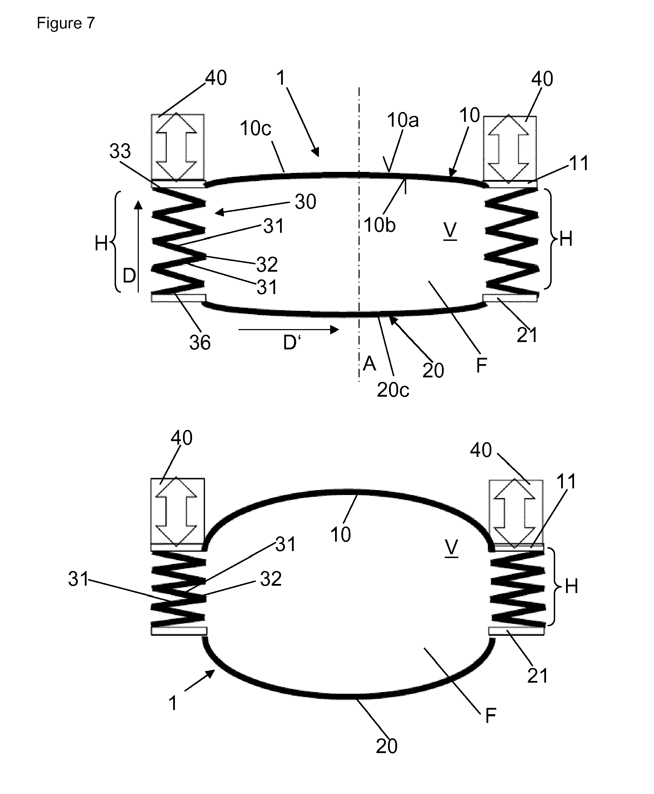

Fig. 7 shows yet another embodiment of a tunable lens 1 according to the invention wherein the lens 1 is designed as described above with respect to Fig. 2, wherein said first optical element 20 is now formed by a transparent and elastically expandable second membrane 20 that is fastened to a circular second holding member 21 as shown in Fig. 1 via an outermost edge region 22 of the second membrane 20 such that the second membrane 10 is preferably in a pretensioned state. The circular second holding member 21 is connected to the second edge region 36 of the first wall 30 and actually delimits an optically active and elastically expandable circular region 20c of the second membrane 20 which region 20c extends up to a circumferential inner edge 21 a of the second holding member 21. As described before, other shapes of said region 20c of the second membrane may also be achieved.

In case said height H of the first wall 30 is altered by means of an actuator means 40 acting on the first holding member 11 and/or the second holding member 21, the pressure of the first fluid F is changed leading to a corresponding change of the curvature of said region 10c of the first membrane 10 as well as of said region 20c of the second membrane 20. Since both membranes 10, 20 can be deformed, less deformation of each membrane 10, 20 is required compared to the case in which only a single membrane 10 is present. Regarding Fig. 7 the actuator means 40 may be connected to one of the holding members 21 in a fixed manner so as to move the other holding member 11.

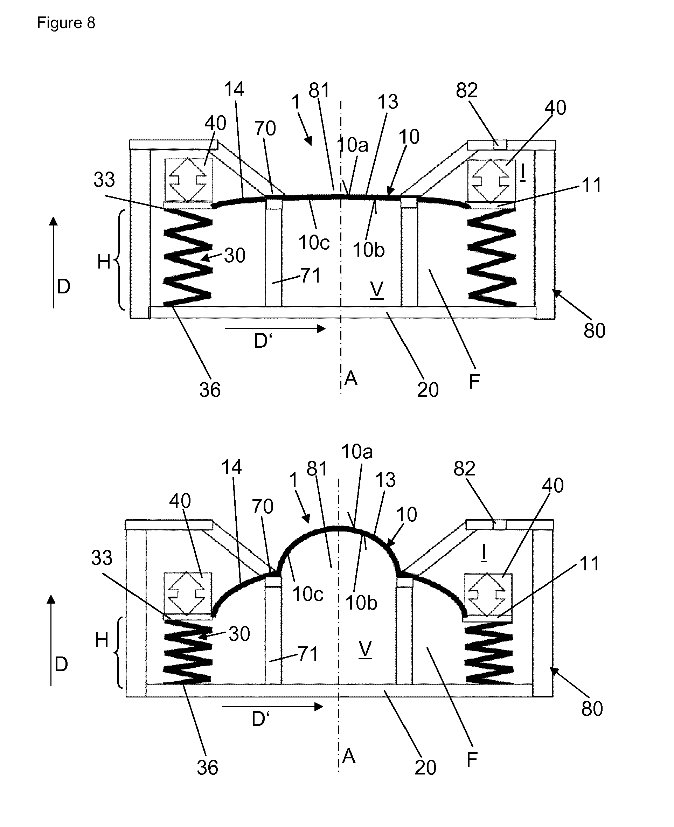

Fig. 8 shows a further embodiment of a tunable lens 1 according to the invention, in which the lens 1 is designed as described above with respect to Fig. 2, wherein the lens 1 further comprises a housing 80, which is connected to the first optical element 20 forming a bottom of said housing 80. The housing 80 surrounds the first wall 30 and further comprises an aperture 81 opposing the first optical element 20 along the optical axis A of the lens 1, wherein said aperture 81 is delimited by a circumferential region 70 of the housing 80 which rests on an outer side 10a of said region 10c of the first membrane 10. Said circumferential region 70 thereby divides said region 10c of the first membrane 10 in an inner region and an outer region with the inner region being now the optically active and elastically expandable region of the first membrane 10 whose curvature is to be adjusted.

The lens 1 further comprises a support ring 71 arranged in the first volume V protruding from the first optical element 20 towards said inner side 10b of the first membrane 10 so that the first membrane 10 is clamped between said circumferential region 70 and the support ring 71. Particularly, the support ring 71 is a ring structure that comprises apertures through which the first fluid F can flow. Due to the support ring 71 and circumferential region 70, the first membrane 10 can assume convex as well as concave curvatures.

Now, in case the height H of the first wall 30 is adjusted as described with respect to Fig. 2, the curvature of said inner region 13 is adjusted according to the change in pressure of the first fluid F induced by changing the height H of the first wall 30. The circumferential region 70 thus acts as a lens shaper. Due to the movement of the first wall 30 inside the housing 80 a change in pressure in an inner space I of the housing 80 delimited by the housing 80, the first wall 30 and said outer region 14 of the first membrane 10 may occur which may influence the shape of the inner region 13 of the first membrane 10 and thus the optical properties of the lens 1. Therefore, the housing 80 comprises an air exchange hole 82 which allows ambient air to enter and leave the inner space I of the housing 80, thus yielding a constant pressure inside said inner space I.

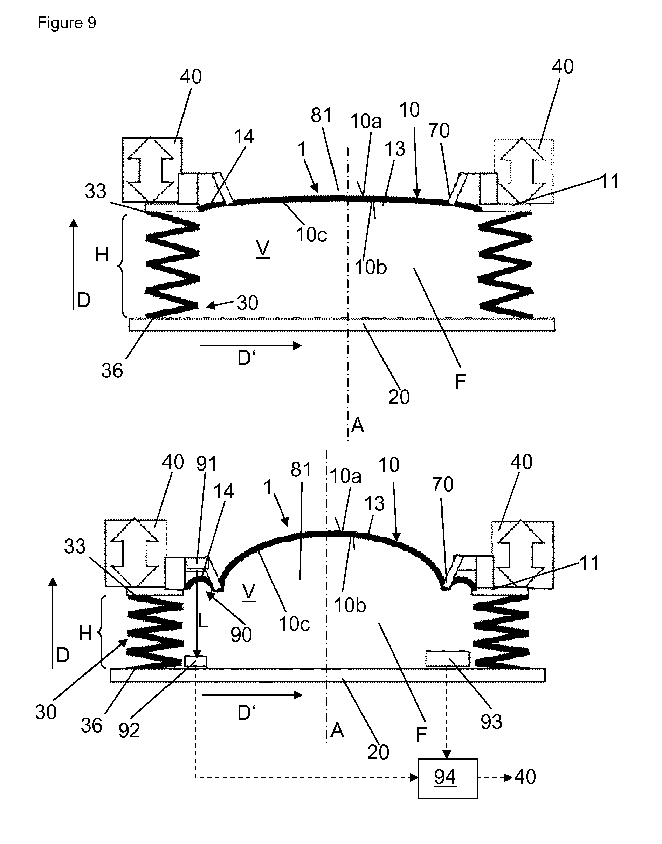

Fig. 9 shows a further embodiment of a lens 1 according to the invention, wherein the lens 1 is designed as described with respect to Fig. 2. In addition, the lens 1 comprises a circumferential region 70 contacting the outer side 10a of the first membrane 10, wherein the circumferential region 70 separates an inner region 13 of said region 10c of the first membrane 10 from an outer region 14 of said region 10c of the first membrane 10. The circumferential region 70 is preferably connected to the first holding member 11 such that it is displaced together with the first holding member 11 upon a height adjusting movement of the first wall 30 due to an action of the actuator means 40.

In order to account for pressure changes of the first fluid F due to a change in temperature as well as to account for temperature-induced changes in the refraction index of the first fluid F and eventually of the optical element 20, the lens 1 comprises a further parasitic lens 90, a light source 91, particularly an LED or a laser, as well as a light intensity sensor 92, particularly a photodiode, a temperature sensor 93 for measuring the temperature of the first fluid F, and a control unit 94 being designed to control the actuator means 40 depending on a signal of the light intensity sensor 92 and the temperature measured by the temperature sensor 93 such that the curvature of first membrane 10, namely of said inner region 13, is adjusted in a fashion that compensates for temperature-induced drifts of the pressure of the first fluid F as well as of the refraction index of the first fluid F.

Said parasitic lens 90 is provided by the outer region 14 of the first membrane 10 and at least a portion of the first fluid F being arranged below said outer region 14 of the first membrane 10, wherein the light source 91 is arranged on the circumferential region 70 so that light emitted by the light source 91 is directed by the parasitic lens 90 towards the light intensity sensor 92 which is arranged inside the first volume V of the lens 1, particularly on the first optical element 20. Likewise, said temperature sensor 93 is arranged in the first volume V as well, particularly on the first optical element 20, too.

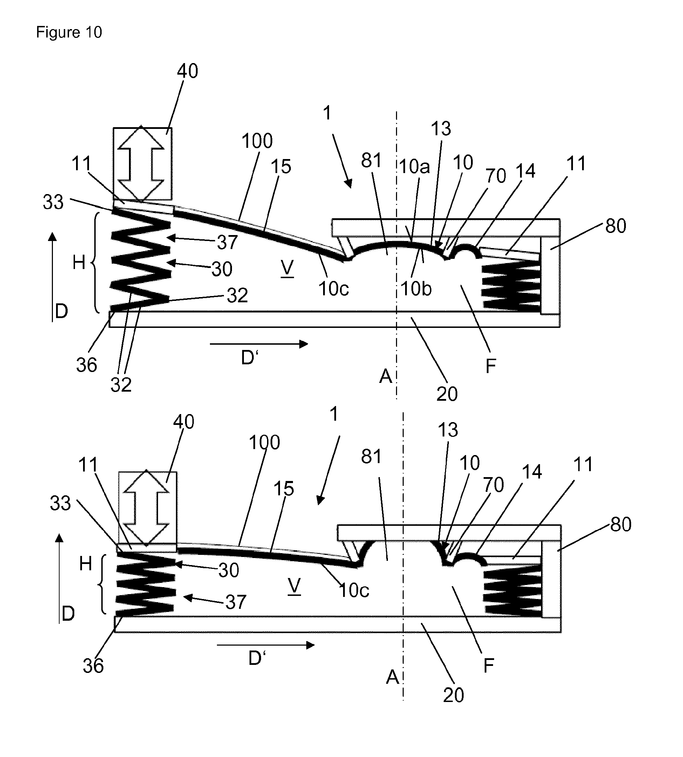

Furthermore, Fig. 10 shows a further embodiment of a tuneable lens 1 according to the invention. The lens 1 comprises a first optical element 20 as well as circumferential first wall 30 protruding from the first optical element 20, wherein the first optical element 20 may be designed as described with respect to Fig. 2. Further, an upper first edge region 33 of the first wall 30 is connected to a first holding member 11 to which the first membrane 10 is attached in a preferably pretensioned state, e.g. as described with respect to Fig 1 or 3. An opposing second lower edge region 36 of the first wall 30 is connected to the first optical element 20.

Furthermore, the lens 1 comprises a part 80 being connected to the first optical element 20, which part 80 reaches over the first membrane 10. The part 80 forms a circumferential region 70 which contacts an outer side 10a of the first membrane 10 and divides the first membrane 10 into an inner region 13 forming the optically active region and elastically expandable of the first membrane 10 whose curvature is to be adjusted and an outer region 14 via which the inner region 13 is connected to said first holding member 11. A portion 15 of said outer region 14 of the first membrane 10 via which said inner region 13 is connected to a section 37 of the first wall 30 that opposes said part 80 of the lens 1 is connected to a rigid layer 100 covering said portion 15 of the outer region 14 of the first membrane 10. The rigid layer 100 serves for stiffening said portion 15 of the first membrane 10 so that a height adjustment of said section 37 of the first wall 30 leads to a deformation of said inner region 13 of the first membrane 10.

Particularly, said section 37 of the first wall 30 is designed to be adjustable in height H along a first direction D oriented along the optical axis A of the lens 1 (i.e. perpendicular to the first optical element 20) such that when the height H of said section 37 of the first wall 30 is decreased, said rigid layer 100 together with said portion 15 of the outer region 14 of the first membrane 10 is pivoted downwards towards the first optical element 20 thus increasing the pressure of the first fluid F and therewith the curvature of the inner region 13 of the first membrane 10, and such that when the height H of said section 37 of the first wall 30 is increased, said rigid layer 100 together with said portion 15 of the outer region 14 of the first membrane 10 is pivoted upwards and away from the first optical element 20 thus decreasing the pressure of the first fluid F and therewith the curvature of the inner region 13 of the first membrane 10.

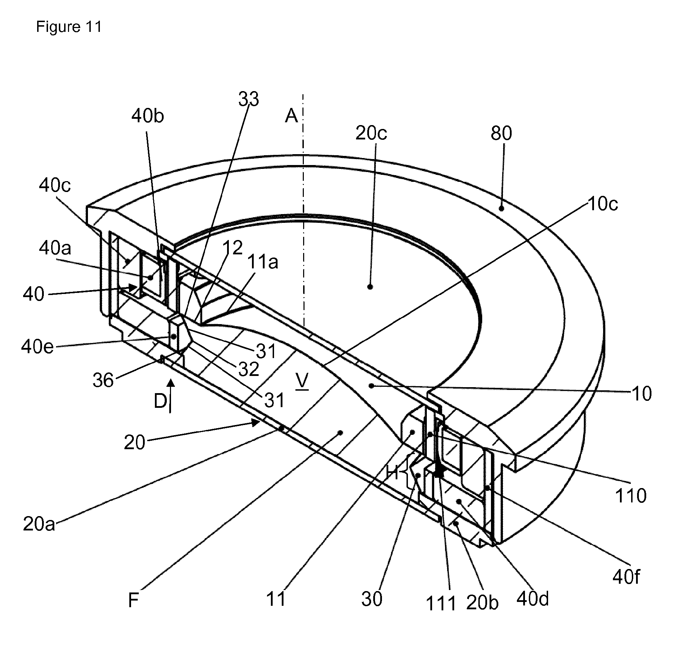

Fig. 11 shows a further embodiment of a tunable lens 1 of the kind shown in Fig. 2, wherein lens 1 comprises a transparent and elastically expandable first membrane 10 which can consist of the afore-described materials. Again, the first membrane 10 is attached via an outermost edge region 12 of the first membrane 10 to a circular first holding member 11 such that the membrane 10 is preferably in a pretensioned state. Again, the circular first holding member 11 delimits an optically active and elastically expandable circular region 10c of the first membrane 10 which region 10c extends up to a circumferential inner edge 11 a of the first holding member 11.

The lens 1 further comprises a first optical element 20 opposing the first membrane 10, wherein said first optical element 20 comprises e.g. a transparent cover element (e.g. cover glass) 20a that is held by a circular frame member 20b of the first optical element 20, wherein said cover element 20a extends perpendicular to the optical axis A of the lens 1.

Said region 10c of the first membrane 10 and the first optical element 20 face each other along said optical axis of the lens 1 and are connected to each other via a circumferential first wall 30 in the form of a bellows. The bellows 30 and the first holding member 11 are surrounded by a housing 80 of the lens 1 which is connected to the frame member 20b. The housing 80 defines an aperture being covered by a further transparent cover element (e.g. cover glass) 20c which opposes the first membrane 10 so that the latter is arranged between the two transparent cover elements 20a, 20c.

The bellows 30 is connected to said first holding member 11 via a first upper circumferential edge region 33 of the bellows 30 and further connected to the first optical element 20, namely to said frame member 20b, via a circumferential second lower edge region 36 of the bellows 30, which second edge region 36 opposes the first edge region 33. Preferably, said first upper circumferential edge region 33 of the bellows 30 is attached to a lower side of the first holding member 11 which faces the first optical element 20. Further, said outermost edge region 12 of the first membrane 10 is preferably also attached to said lower side of the first holding member 11. According to an embodiment, it is provided that the bellows 30 and the first membrane 10 are integrally connected to each other, i.e., the first upper edge region 33 of the bellows 30 is then integrally connected to said outermost edge region 12 of the first membrane 10, while both of said integrally connected edge regions 33, 12 are connected to said lower side of the first holding member 11. Again, the first membrane 10, the first optical element 20, and said first wall 30 are connected such that they delimit a first volume V of the lens 1 which is filled with a first fluid F such that said first fluid F fills the first volume V completely as described with respect to Fig. 2.

Now, in order to adjust a curvature of the membrane 10, e.g. of said region 10c of the first membrane 10, for adjusting the focal length of the lens 1 and/or so as to adjust the spatial position of the first membrane 10 with respect to the first optical element 20, the bellows 30 is designed to be adjustable in height H along a first direction D with respect to said first optical element 20 as described in relation to Fig. 2, so as to adjust the pressure of the first fluid F residing inside the first volume V.

Therefore, the bellows 30 comprises two circumferential regions 31 extending along the first holding member 11 as shown in Fig. 11, which regions 31 are connected to each other via a circumferential crease 32 extending along said first holding member 11.

In order to adjust the height H of the first wall/bellows 30 along said first direction D the lens 1 comprises an actuator means 40 which is designed to exert a force on the first holding member 11 such that the first holding member 11 is either moved counter to the first direction D so that said regions 32 of the bellows 30 are folded towards each other and the height H of the first wall/bellows 30 decreases or that the first holding member 11 is moved in the first direction D, i.e., away from the first optical element 20, so that the regions 31 of the bellows 30 are folded/pivoted away from each other and the height H of the first wall/bellows 30 increases correspondingly.

Particularly, the actuator means 40 comprises a coil 40a carried by an annular bobbin 40b which is rigidly connected to the first holding member 11 and surrounds the latter. The coil 40a comprises a wire that is wound on the bobbin 40b around the optical axis A of the lens 1. The actuator means 40 further comprises a first annular motor magnet 40c surrounding the coil 40a / bobbin 40b as well as a second annular motor magnet 40d extending below the bobbin 40b and the first magnet 40c. Further, the actuator means 40 comprises a first and a second annular magnetic flux guiding structure 40e, 40f (e.g. out of a magnetically soft material such as e.g. iron) having a rectangular cross section, respectively, for shaping the magnetic flux generated by the magnets 40c, 40d, wherein the first structure 40e extends between the bellows 30 and the second motor magnet 40d adjacent to the second motor magnet 40d, whereas the second structure 40f extends adjacent to the first and second motor magnet 4c, 4d on an outer side of the magnets 4c, 4d facing away from the first structure 4e, wherein the second structure 4f surrounds the first and second motor magnet 4c, 4d.

Now, a current applied to the coil 40a interacts with the magnetic flux created by the magnets 40c, 40d and the flux guiding structures 40e, 40f and the resultant electromotive force moves the coil 40a and the bobbin 40b - depending on the direction of the current inside the coil 40a - either in the first direction D or counter to the first direction D leading to an elongation of the bellows 30 or a compression of the bellows 30 by means of which the curvature of said region 10c of the first membrane 10 can be adjusted as desired.

For guiding this movement of the first holding member 11 along the optical axis A, the lens 1 further comprises at least one linear guide pin 110 connected to the housing 80, which linear guide pin 110 is slideably arranged in an associated bushing 111 formed or comprised by the first holding member 11.

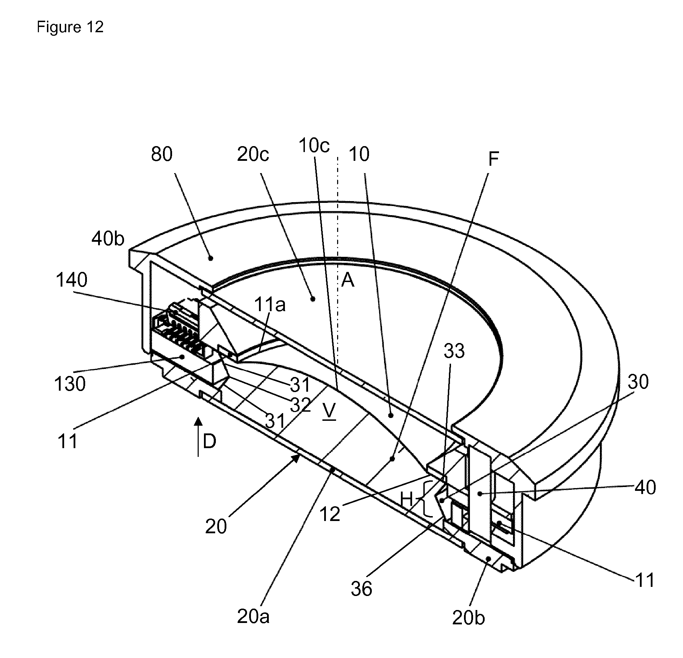

Fig. 12 shows a further embodiment of a lens 1 that is designed as described with respect to Fig. 11, wherein in contrast to Fig. 11 the actuator means 40 is not formed by a coil motor but by a piezo motor comprising three piezo actuators 40 (only one of which is shown in Fig. 12) that are equidistantly arranged with respect to each other along the first holding member 11 (i.e. the radial directions from the center of the lens 1 pointing towards adjacent piezo actuators 40 enclose an angle of 120°). Particularly, these piezo actuators 40 each comprise a pin 40 that is designed to contact a guiding hole in the member 11 while moving it upwards in the first direction D for elongation of the bellows 30 so as to increase the height H of the bellows 30 or downwards counter to the first direction D for shortening the bellows 30 so as to decrease the height H of the bellows 30 leading to the afore-described effects on the curvature of said region 10c of the first membrane 10.

The lens 1 may further comprise a printed circuit board 130 comprising e.g. a connector 140 for connecting e.g. an electronic control unit to the lens 1 e.g. for controlling said actuator means 40.

## Claims

1. Lens, comprising:
- a transparent and elastically expandable first membrane (10),
- a transparent first optical element (20) opposing the first membrane (10),
- a first wall (30) connecting the first optical element (20) to the first membrane (10),
- wherein the first membrane (10), the first optical element (20), and said first wall (30) delimit a first volume (V), and
- a first fluid (F) residing in said first volume (V),
**characterized in that**,
the first wall (30) is designed to be adjustable in height (H) with respect to said first optical element (20), so as to adjust the pressure of the first fluid (F) residing inside the first volume (V) and therewith a curvature of said first membrane (10), and/or so as to adjust a spatial position of the first membrane (10).

2. Lens according to claim 1, **characterized in that** said first wall (30) is designed to be adjustable in height (H) such that when said height (H) is decreased, the pressure of the first fluid (F) increases causing the first membrane (10) to expand and said curvature of the first membrane (10) to increase, and such that when said height (H) is increased, the pressure of the first fluid (F) decreases causing the first membrane (10) to contract and said curvature of the first membrane (10) to decrease.

3. Lens according to claim 1 or 2, **characterized in that** said first wall (30) is designed to be adjusted in height (H) along a first direction (D), wherein the first wall (30) is designed to be deformed along said first direction (D) in order to be adjusted in height (H) along said first direction (D), wherein the first wall (30) extends along the first direction (D) from the first optical element (20) towards the first membrane (10) or wherein the first direction (D) runs parallel to an optical axis (A) of the lens (1) and/or runs perpendicular to the first optical element (20), wherein particularly the first wall (30) is designed such that it deforms easier in said first direction (D) along which the first wall (30) comprises said adjustable height (H) than in a second direction (D') running perpendicular to said first direction (D).

4. Lens according to one of the preceding claims, **characterized in that** said first wall (30) comprises a bellows or is formed as a bellows, wherein particularly said bellows comprises a plurality of regions (31), wherein particularly each two neighboring regions (31) are connected to each other via a crease (32), particularly such that when said height (H) of the first wall (30) is decreased said neighboring regions (31) are folded towards each other and when said height (H) of the first wall (30) is increased said neighboring regions (31) are folded away from each other.

5. Lens according to one of the preceding claims, **characterized in that** the lens (1) comprises a first holding member (11) for holding the first membrane (10), wherein the first membrane (10) is fastened to said holding member (11), particularly in a pretensioned state, and wherein particularly the first membrane (10) is fastened to the first holding member (11) via an outermost edge region (12) of the first membrane (10), and wherein particularly the first holding member (11) delimits an optically active and elastically expandable circular region (10c) of the first membrane (10) which region (10c) extends up to a circumferential inner edge (11a) of the first holding member (11), and wherein particularly said region (10c) comprises said curvature to be adjusted, and wherein particularly said first holding member (11) is connected to the first wall (30), wherein particularly the first holding member (11) is connected to a first edge region (33) of the first wall (30).

6. Lens according to one of the preceding claims, **characterized in that** the lens (1) comprises an actuator means (40) coupled to the first wall (30), wherein said actuator means (40) is designed to exert a force on the first wall (30) so as to adjust the height (H) of the first wall (30), wherein particularly said actuator means (40) is coupled to said first wall (30) via said first holding member (11), wherein particularly said actuator means (40) is directly coupled to said first holding member (11), and wherein particularly the point of application of said force lies outside said region (10c) of the first membrane (10).

7. Lens according to claim 6, **characterized in that** the first wall (30) is designed to be adjustable in height (H) such that the respectively adjusted height (H) is constant along the first wall (30) and/or such that the height (H1, H2) of at least two different sections (34, 35) of the first wall (30) can be adjusted differently, so that the height (H1) of one section (34) differs from the height (H2) of the other section (35), wherein particularly the two sections (34, 35) are opposing sections (34, 35) of the first wall (30), wherein particularly said actuator means (40) is designed to adjust the height (H) of the first wall (30) such that the respectively adjusted height (H) of the first wall (30) is constant along the first wall (30) and/or such that the height (H1) of said one section (34) of the first wall (30) differs from the height (H2) of said other section (35) of the first wall (30).

8. Lens according to one of the preceding claims, **characterized in that** said first wall (30) is a circumferential first wall (30).

9. Lens according to one of the preceding claims, **characterized in that** the lens (1) comprises a second optical element (50) opposing the first optical element (20), wherein the first membrane (10) and particularly the first holding member (11) are arranged between the first and the second optical element (20, 50), and wherein the lens (1) comprises a circumferential second wall (60) connecting the second optical element (50) to the first membrane (10), particularly to the first holding member (11), thus providing a coupling between the two walls (30, 60), wherein particularly the first membrane (10), the second optical element (50), and said second wall (60) delimit a second volume (V'), wherein particularly the lens (1) further comprises a second fluid (F') residing in said second volume (V'), and wherein particularly said second wall (60) is designed to be adjustable in height (H') with respect to said second optical element (50), and wherein particularly the two walls (30, 60) are designed to be adjusted in height (H, H') together due to said coupling of the first wall (30) to the second wall (60), so as to adjust the pressure of the first fluid (F) residing inside the first volume (V) and the pressure of the second fluid (F') residing inside the second volume (V') and therewith a curvature of said first membrane (10), and/or so as to adjust a spatial position of the first membrane (10) with respect to the optical elements (20, 50), wherein particularly when the height (H) of the first wall (30) is decreased the height (H') of the second wall (60) is increased and vice versa due to said coupling of the first wall (30) to the second wall (60), and wherein particularly the first wall (30) is tilted towards the first optical element (20) and the second wall (60) is tilted towards the second optical element (50), particularly so as to increase the field of view of the lens (1).

10. Lens according to one of the claims 1 to 8, **characterized in that** the first optical element (20) is formed as a transparent and elastically expandable second membrane (20), such that when said height (H) of the first wall (30) is adjusted also a curvature of the second membrane (20) and/or a spatial position of the second membrane (20) is adjusted, wherein particularly the lens (1) comprises a second holding member (21) for holding the second membrane (20), wherein particularly the second membrane (20) is fastened to said second holding member (21) in a pretensioned state, and wherein particularly the second membrane (20) is fastened to the second holding member (21) via an outermost edge region (22) of the second membrane (20), and wherein particularly the second holding member (21) delimits an optically active and elastically expandable circular region (20c) of the second membrane (20) which region (20c) extends up to a circumferential inner edge (21 a) of the second holding member (21), and wherein particularly said region (20c) comprises said curvature of the second membrane (20) to be adjusted, and wherein particularly said second holding member (21) is connected to the first wall (30), wherein particularly the second holding member (21) is connected to a second edge region (36) of the first wall (30), and wherein particularly the second membrane (20) is fastened to the second holding member (21) via an outer edge region (22) of the second membrane (20).

11. Lens according to one of the claims 1 to 8, **characterized in that** the lens (1) comprises a circumferential region (70) contacting an outer side (10a) of the first membrane (10) facing away from the first fluid (F), wherein the circumferential region (70) separates an inner region (13) of the first membrane (10) comprising said curvature to be adjusted from an outer region (14) of the first membrane (10).

12. Lens according to claim 11, **characterized in that** the lens (1) comprises a housing (80), wherein said circumferential region (70) is a circumferential edge region of the housing (80), which edge region (70) delimits an aperture (81) of the housing (80), wherein particularly said housing (80) surrounds the first wall (30), and wherein particularly said housing (80) comprises an air exchange hole (82) for allowing ambient air to flow into and out of the housing (80).

13. Lens according to claim 11, **characterized in that** said outer region (14) of the first membrane (10) defines a further lens (90), wherein the lens (1) further comprises a light source (91), particularly an LED, as well as a light intensity sensor (92), particularly a photodiode, wherein the light source (91) is designed to shine light on said further lens (90), such that said further lens (90) directs at least a portion of said light on the light intensity sensor (92), and wherein the lens (1) further comprises a temperature sensor (93) for detecting the temperature of the first fluid (F), wherein particularly said temperature sensor (93) is arranged in the first volume (V), and wherein particularly the lens (1) comprises a control unit (94) being designed to control the actuator means (40) depending on a signal of the light intensity sensor (92) and the temperature measured by the temperature sensor (93) such that the first membrane (10) is deformed in a fashion that compensates for temperature-induced drifts of the pressure of the first fluid (F) and/or of the refraction index of the first fluid (F).

14. Lens according to claim 11, **characterized in that** a rigid layer (100) is fastened to at least a portion (15) of the outer region (14) of the first membrane (10), which portion (15) connects the inner region (13) of the first membrane (10) to a section (37) of the first wall (30), particularly via the first holding member (11), wherein particularly said section (37) of the first wall (30) is designed to be adjustable in height (H) such that when the height (H) of said section (37) of the first wall (30) is decreased, said rigid layer (100) together with said portion (15) of the outer region (14) of the first membrane (10) is pivoted towards the first optical element (20) thus increasing the pressure of the first fluid (F) and therewith the curvature of the inner region (13) of the first membrane (10), and such that when the height (H) of said section (37) of the first wall (30) is increased, said rigid layer (100) together with said portion (15) of the outer region (14) of the first membrane (10) is pivoted away from the first optical element (20) thus decreasing the pressure of the first fluid (F) and therewith the curvature of the inner region (13) of the first membrane (10).

15. Method for tuning a lens which comprises a transparent and elastically expandable first membrane (10), a transparent first optical element (20) opposing the first membrane (10), a first wall (30) connecting the first optical element (20) to the first membrane (10), wherein the first membrane (10), the first optical element (20), and said first wall (30) delimit a first volume (V), and a first fluid (F) residing in said first volume (V), wherein particularly said first fluid (F) fills the first volume (V) completely and particularly contacts said first membrane (10), the method comprising the steps of: adjusting the first wall (30) in height (H) with respect to said first optical element (20), so as to adjust the pressure of the first fluid (F) residing inside the first volume (V) and therewith a curvature of said first membrane (10), and/or so as to adjust a spatial position of the first membrane (10).
